# EUROPÄISCHE PATENTSCHRIFT

(11) **EP 2 925 627 B1**
(45) Veröffentlichungstag und Bekanntmachung des Hinweises auf die Patenterteilung: **05.09.2018**
(21) Anmeldenummer: 13783545.0
(22) Anmeldetag: 25.10.2013
(51) Int. Cl.: B65D 63/10, B29C 55/06, C08L 67/02, C08K 3/00, C08L 23/00, B29K 67/00, B29K 23/00, B29K 105/16

(54) **KUNSTSTOFF-UMREIFUNGSBAND, DESSEN VERWENDUNG SOWIE VERFAHREN ZUR HERSTELLUNG EINES SOLCHEN KUNSTSTOFF-UMREIFUNGSBANDES**
PLASTIC STRAP, USE THEREOF, AND METHOD FOR PRODUCING SUCH A PLASTIC STRAP
BANDE DE CERCLAGE EN MATIÈRE PLASTIQUE, SON UTILISATION AINSI QUE PROCÉDÉ DE FABRICATION D'UNE TELLE BANDE DE CERCLAGE EN MATIÈRE PLASTIQUE

(30) Priorität: 27.11.2012 DE 102012111498
(43) Veröffentlichungstag der Anmeldung: 07.10.2015
(73) Patentinhaber: TITAN Umreifungstechnik GmbH & Co.KG, 58332 Schwelm (DE)
(72) Erfinder: LENZEN, Peter Wilhelm, 45549 Sprockhövel (DE)
(74) Vertreter: Nunnenkamp, Jörg
(86) Internationale Anmeldenummer: PCT/EP2013/072428
(87) Internationale Veröffentlichungsnummer: WO 2014/082804

(56) Entgegenhaltungen:
- EP-A2- 0 377 513
- EP-A2- 0 934 812
- WO-A1-03/087200
- CN-A- 101 348 601
- CN-A- 102 320 743
- DE-U1- 20 320 505
- JP-A- 2001 341 195
- US-A- 5 154 964
- R. Gächter, H. Müller: "Kunststoff-Additive", 31. Dezember 1979 (1979-12-31), Carl Hanser Verlag, München Wien, XP002718582, ISBN: 3-446-12914-6 Seiten 334-335, Seite 334 - Seite 335

## Beschreibung

Die Erfindung betrifft ein Kunststoff-Umreifungsband zum Umschlingen von einem oder mehreren Gegenständen, welches bis zu 90 Gew.-% Polyester und bis zu 5 Gew.-% Polyethylen, Polypropylen sowie Kombinationen als ein Bestanteil enthält

Solche Kunststoff-Umreifungsbänder werden in der Praxis vielfältig eingesetzt, um unterschiedliche Produkte, Ladegüter gegeneinander und/oder beispielsweise auf einer Transportfläche wie einer Palette zu fixieren. Neben solchen Kunststoffbändern kommen in der Praxis nach wie vor Stahlbänder zum Einsatz, die eine hohe Zugfestigkeit und geringe Dehnung aufweisen. Zum Verbinden der Bandenden bei Stahlbändern ist ein spezieller Verschluss vorgesehen. Aufgrund scharfer Schnittkanten von Stahlbändern besteht Verletzungsgefahr, die Stahlbänder unterliegen der Rosteinwirkung und können im Übrigen auch das zu fixierende Gut beschädigen.

Im Rahmen der US 5 342 687 A wird ein Kunststoff-Umreifungsband beschrieben, welches auf unter anderem Polyethylen und Polyethylenterephthalat sowie Polyamid und Polypropylen als denkbar eingesetzte Kunststoffe zurückgreift. Darüber hinaus verfügt das bekannte Kunststoff-Umreifungsband über eingelagerte Glaskugeln mit einer Partikelgröße von 60 µm und weniger.

Ähnliches beschreibt die EP 0 807 067 B1, die sich mit einem Bebänderungssystem befasst. In diesem Zusammenhang können erneut Glaskugeln im Kunststoff eingelagert sein, und zwar bis zu einem Gewichtsanteil von bis zu 20 Gew.-%.

Um die zuvor beschriebenen Probleme bei Stahlbändern zu beherrschen, hat man in der Praxis und im Schrifttum bereits versucht, Kunststoffbänder bzw. Kunststoff-Umreifungsbänder im Hinblick auf die Festigkeit zu ertüchtigen. An dieser Stelle schlägt beispielsweise die DE 27 27 356 C2 ein Bindeband vor, welches unter anderem mit einem bandförmigen Kern mit kontinuierlichen Verstärkungsfasern ausgerüstet ist. Bei den Verstärkungsfasern handelt es sich um Glasfasern.
Darüber hinaus beschreibt die GB 1 132 060 ebenfalls ein Kunststoff-Umreifungsband, dessen Festigkeit mit Hilfe von eingelagerten Fasern gesteigert wird. Ähnlich geht die DE 10 2012 102 155 (Stand der Technik nach Art. 54(3) EPÜ) der Anmelderin vor. Kunststoff-Umreifungsbänder mit eingelagerten Glasfasern oder faserhaltigem Material verfügen zwar über eine geringe Dehnung und auch im Vergleich zu einem Kunststoff-Umreifungsband ohne solche Fasern über eine gesteigerte Steifigkeit. Darüber hinaus wird im Stand der Technik mit Kunststoffmischungen aus Polyester und Polyolefin gearbeitet, um ein Aufspleißen des solchermaßen realisierten Kunststoff-Umreifungsbandes in Längsrichtung zu verhindern. Verwiesen wird in diesem Zusammenhang auf die WO 03/087200 A1.
Der gattungsbildende Stand der Technik nach der EP 0 377 513 A2 respektive der WO 03/087 200 A1 befasst sich allgemein mit Kunststoff-Umreifungsbändern, die durch Schmelzextrusion hergestellt werden. Dabei kommt als Hauptkomponente Polyethylenterephthalat bzw. Polyester zum Einsatz. Als demgegenüber weniger bedeutende Komponente wird auf Polyolefine und bevorzugt Polypropylen zurückgegriffen. Tatsächlich spricht die EP 0 377 513 A2 an dieser Stelle von einer Zusammensetzung mit 80 bis 97 Gew.-% Polyethylenterephthalat sowie 3 bis 20 Gew.-% des Olefins.

Der nächstliegende Stand der Technik nach der US 5 154 69 64 A befasst sich mit einem Kunststoff-Umreifungsband, welches aus verschiedenen Kunststoffen wie beispielsweise Polyethylen, Polypropylen, Polyamid, Polybutylenterephtalat, Polyethylenterephtalat aufgebaut ist. Außerdem finden sich eingelagerte Glaskugeln, die im Rahmen einzelner Beispiele bis zu 15 Gew.-% und bis zu 20 Gew.-% im Kunststoff enthalten sind. Die Glaskugeln selbst weisen eine Partikelgröße von weniger als 60 Mikrometer auf.

Der Stand der Technik kann nicht in allen Aspekten zufriedenstellen. Insbesondere wenn man das Ziel verfolgt, die in der Praxis nach wie vor eingesetzten Stahlbänder durch entsprechend modifizierte Kunststoffbänder ganz oder teilweise zu ersetzen, treten neben Fragen der Festigkeit und Dehnung der Kunststoff-Umreifungsbänder als gleichsam Substitut weitere Probleme auf. Nämlich derart, dass die fraglichen Umreifungsbänder beispielsweise zum Umreifen von Metallbandcoils typischerweise hohen Druckbelastungen ausgesetzt werden. Das gilt insbesondere für den Fall, dass die entsprechend umreiften Metallbandcoils auf einer Hallenfläche oder auch übereinander abgelegt werden.

Die hiermit verbundenen Druckbelastungen sind so hoch, dass konventionelle Kunststoff-Umreifungsbänder - auch mit eingelagerten Fasern oder Glasfasern - signifikant plattgedrückt werden. Daraus können Materialschwächungen des Kunststoff-Umreifungsbandes ebenso wie ungewollte Längungen resultieren. Beides ist für die nachfolgende Verarbeitung solcher Metallbandcoils besonders nachteilig, nicht nur was die etwaige Stapelung und den Transport angeht, sondern auch unter Berücksichtigung von Sicherheitsaspekten. Denn ein reißendes Umreifungsband stellt mit dem dann freien Transportgut eine erhebliche Gefahrenquelle dar. Hier will die Erfindung insgesamt Abhilfe schaffen.

Der Erfindung liegt das technische Problem zugrunde, ein derartiges Kunststoff-Umreifungsband so weiterzuentwickeln, dass dieses im günstigsten Fall bisher eingesetzte Stahlbänder ganz oder teilweise ersetzen kann, insbesondere eine geringe Dehnung aufweist und nicht oder kaum zu Dimensionsänderungen selbst bei starker Druckbelastung neigt.
Zur Lösung dieser technischen Problemstellung ist Gegenstand der Erfindung ein Kunststoff-Umreifungsband zum Umschlingen von einem oder mehreren Gegenständen nach Anspruch 1 und das Verfahren zu seiner Herstellung nach Anspruch 6. Ferner betrifft die Erfindung die Verwendung des Kunststoff-Umreifungsbandes nach Anspruch 7.

Im Rahmen der Erfindung wird also zunächst einmal ein spezielles Kunststoff-Umreifungsband beschrieben, welches durch die eingelagerten Mikrokugeln über eine geringe Dehnung verfügt. Tatsächlich werden an dieser Stelle Dehnungen beobachtet, die regelmäßig 10 % nicht überschreiten. Solche Dehnungen werden bei entsprechenden Reißversuchen beobachtet, d. h. für den Fall dass das Umreifungsband bis zum Reißen beaufschlagt wird. Als Folge hiervon werden Zugfestigkeiten des erfindungsgemäßen Kunststoff-Umreifungsbandes erreicht, die regelmäßig deutlich über 100 N/mm² entsprechend 100 MPa angesiedelt sind. Meistens werden sogar Zugfestigkeiten von bis zu 500 N/mm² (500 MPa) beobachtet, die zwar diejenigen von Stahl (1000 MPa) noch unterschreiten, für die Zwecke der Umreifung von Stahlbandcoils im Beispielfall jedoch absolut ausreichend sind.
Verwiesen wird in diesem Zusammenhang auf die DE 10 2005 048 238 B4, welche unter Berücksichtigung einer ähnlichen Zielsetzung mit einem Bindeband aus einem Verbundwerkstoff aus Endlosfasern und einem thermoplastischen Kunststoffmaterial arbeitet. Im Gegensatz hierzu kommen bei der Erfindungslehre als Verstärkung keine Endlosfasern zum Einsatz, sondern die in die Matrix aus Kunststoff eingelagerten Mikrokugeln mit einem Anteil von bis zu 20 Gew.-%.

Die Mikrokugeln als solche sind nun ihrerseits besonders druckfest gestaltet, um die bereits beschriebenen Druckbelastungen bei der Verwendung solcher Kunststoff-Umreifungsbänder beispielsweise zum Umreifen von Stahlbandcoils beherrschen zu können. Tatsächlich sind die Mikrokugeln meistens so gestaltet, dass sie eine Druckfestigkeit (Kaltdruckfestigkeit bzw. Biegefestigkeit) von mehr als 100 N/mm² und insbesondere mehr als 200 N/mm² aufweisen. Im Regelfall werden sogar Druckfestigkeiten von deutlich mehr als 500 N/mm² beobachtet. Darüber hinaus verfügt die Mikrokugel insgesamt über eine Schmelztemperatur, die die Verarbeitungstemperatur des Kunststoffes überschreitet.

Tatsächlich werden an dieser Stelle meistens Schmelztemperaturen von wenigstens 300 °C, insbesondere von 400 °C und besonders bevorzugt solche von mehr als 500 °C beobachtet. Auf diese Weise können die Mikrokugeln in beispielsweise einem Kunststoffgranulat verteilt und problemlos zusammen mit dem Granulat zu dem Kunststoff-Umreifungsband gemeinsam extrudiert werden. Das Gleiche gilt für den Fall, dass die Mischung aus den Mikrokugeln und dem Kunststoff bzw. dem Kunststoffgranulat zunächst als Kunststoffausgangsmaterial bzw. Kunststoff-Umreifungsbandmaterial folienartig hergestellt und dann in Streifen geschnitten wird. Da solche Extrusionen typischerweise bei Temperaturen des Extruders von 200 °C bis maximal 300 °C vorgenommen werden, stellt die zuvor angesprochene Bemessungsregel sicher, dass bei der Extrusion die Mikrokugeln nicht schmelzen, sondern vielmehr ihren festen Aggregatzustand bei der Einlagerung in die Kunststoffmatrix beibehalten.

Das Gleiche gilt für den Fall, dass die Enden des hergestellten Kunststoff-Umreifungsbandes miteinander gekoppelt werden. Auch in diesem Fall kann beispielsweise schweißend oder reibschweißend vorgegangen werden, wobei vergleichbare Temperaturen wie zuvor (200 °C bis maximal 300 °C) beobachtet werden. Da folgerichtig die Mikrokugeln auch bei einem solchen VerbindungsVorgang der Enden des Kunststoff-Umreifungsbandes ihren festen Aggregatzustand beibehalten, besteht die Möglichkeit, dass die Enden des fraglichen Kunststoff-Umreifungsbandes thermisch unter gleichzeitig gegenseitiger Migration der eingelagerten Mikrokugeln miteinander verbunden werden. Auf diese Weise fungieren die Mikrokugeln bei der Realisierung eines solchen Verschlusses wie gleichsam den Verschluss durchdringende Krallen, sodass eine besonders innige Verbindung der Enden bei einem Umreifungsvorgang mithilfe des erfindungsgemäßen Kunststoff-Umreifungsbandes beobachtet wird.

Als Material für die Herstellung der Mikrokugeln empfiehlt die Erfindung Bakelit, einen oder mehrere Minerale, Steinwolle, Keramik, einen oder mehrere Metalle, ein Thermoplast oder Silikate. Bei dem eingesetzten Thermoplast handelt es sich typischerweise um einen solchen Kunststoff, welcher eine extrem hohe Gebrauchstemperatur aufweist, die jedenfalls 300 °C überschreitet. Ein Beispiel hierfür stellt der thermoplastische Kunststoff mit dem Markennamen "Duratron PB┌ der Firma Quadrant dar.

Daneben können Aluminiumsilikate und Siliciumdioxide zum Einsatz kommen, die je nach Auslegung mit Schmelztemperaturen von wenigstens 600 °C bis zu 1500 °C ausgerüstet sind. Ähnliches gilt für die an dieser Stelle einsetzbaren Metalle, bei denen es sich vorteilhaft um Kalt- oder Warmarbeitsstähle handeln kann. Grundsätzlich sind natürlich auch andere Metalle wie Aluminium oder Messing generell denkbar. Ebenso Keramiken wie Aluminiumnitrit, Borcarbid, Porzellan, Siliciumcarbid und so weiter.

Die Mikrokugeln verfügen neben der bereits angegebenen Druckfestigkeit von deutlich mehr als 100 N/mm² typischerweise über ein Elastizitätsmodul, welches mehr als 10 kN/mm², insbesondere mehr als 50 kN/mm² und besonders bevorzugt mehr als 100 kN/mm² beträgt. Dadurch ist sichergestellt, dass die Mikrokugeln über die nötige Steifigkeit und Druckfestigkeit verfügen, um die beispielsweise beim Umreifen von Stahlcoils entstehenden Druckbelastungen aufnehmen zu können.
Das erfindungsgemäße Kunststoff-Umreifungsband verfügt typischerweise über eine Breite von bis zu 40 mm oder sogar von bis zu 50 mm. Die Stärke oder Materialdicke des erfindungsgemäßen Kunststoff-Umreifungsbandes ist bei maximal 5 mm angesiedelt. Dabei kann das fragliche Kunststoff-Umreifungsband unmittelbar und von vorneherein streifenförmig durch Extrusion als entsprechendes Streifen-Bandmaterial hergestellt sein. Es ist aber auch möglich, mit einem Kunststoff-Umreifungsbandmaterial bzw. Kunststoffausgangsmaterial mit folienartigem Charakter zu arbeiten, welches anschließend in Streifen geschnitten wird.
Bei dem Kunststoff zur Aufnahme und Einlagerung der Mikrokugeln handelt es sich um einen Kunststoff aus überwiegend Polyester mit einem geringen Zusatz an Polyethylen. Erfindungsgemäß enthält der Kunststoff Polyester im Bereich von 85 Gew.-% bis 90 Gew.-% und bis zu 5 Gew.-% Polyolefin. Zusätzlich werden dann noch bis zu 20 Gew.-% Mikrokugeln für die Herstellung eingesetzt. Bei dem Polyolefin handelt es sich um Polyethylen, Polypropylen oder Kombinationen hieraus.
Auf diese Weise wird das Kunststoff-Umreifungsband zunächst einmal dahingehend ausgelegt, dass die Kunststoffmatrix als solche bereits über eine im Vergleich zu herkömmlichen Kunststoff-Umreifungsbändern erhöhte Festigkeit verfügt. Außerdem verhindert die Kombination aus Polyester und Polyolefin in den angegebenen Gewichtszusammensetzungen ein Aufspalten in Längsrichtung, wie dies im Detail in der WO 03/087200 A1 näher erläutert wird. Darüber hinaus sorgen die in das erfindungsgemäße Kunststoff-Umreifungsband eingelagerten Mikrokugeln für die geforderte Dimensionsstabilität, welche insbesondere beim Umreifen von Metallbandcoils von besonderer Bedeutung ist. Tatsächlich sorgen nämlich die Mikrokugeln dafür, dass das Kunststoff-Umreifungsband nach der Erfindung auch bei einer Druckbelastung überwiegend seine Materialstärke beibehält und nicht wie die Kunststoff-Umreifungsbänder des Standes der Technik mit eingelagerten Verstärkungsfasern "plattgequetscht" wird. Vielmehr fungieren die Mikrokugeln in der sie aufnehmenden Kunststoffmatrix wie ein Verstärkungskorsett, ohne dass in diesem Zusammenhang bestimmte Richtungen in Längsrichtung wie bei eingelagerten Verstärkungsfasern oder auch in Querrichtung ausgezeichnet sind. Damit können aber auch keine in Längsrichtung sich bildenden Mikroschläuche um die jeweilige Faser wie im Stand der Technik gebildet werden, die bei einer Druckbelastung seitlich unter Dickenreduktion des Kunststoff-Umreifungsbandes ausweichen.

Vielmehr kommt es im Rahmen der Erfindung schon vom Ansatz her nicht zu solchen Mikroschläuchen, weil die Mikrokugeln in jeder Raumrichtung nur eine äußerst begrenzte Ausdehnung von 0,5 mm und insbesondere weniger als 0,1 mm aufweisen. Bei einer Druckbelastung ist im Rahmen der Erfindung damit zu rechnen, dass die Mikrokugeln einander angenähert werden und das Kunststoff-Umreifungsband "verhärten". Es wird also der Effekt beobachtet, dass das Kunststoff-Umreifungsband im Querschnitt um so härter wird, je höher die Druckbelastung ansteigt. Dadurch kann das erfindungsgemäße Kunststoff-Umreifungsband vorteilhaft auch für das Umreifen von Metallbandcoils und insbesondere Stahlbandcoils eingesetzt werden.

Neben der bereits beschriebenen und überwiegenden Dimensionsstabilität des erfindungsgemäßen Kunststoff-Umreifungsbandes verfügt dieses über die üblichen Vorteile solcher Kunststoff-Umreifungsbänder gegenüber Stahlbändern. Tatsächlich verursachen Kunststoff-Umreifungsbänder keine Oberflächenschäden an der Metallbandoberfläche, wie sie im Detail in der bereits in Bezug genommenen DE 10 2005 048 238 B4 erläutert werden. Auch Rost und hiermit verbundene Negativeffekte werden von vornherein ausgeschlossen.

Schließlich ist die Handhabung solcher Kunststoff-Umreifungsbänder für beteiligte Personen mit einem deutlich geringeren Risiko verbunden und treten Verletzungen bei der Umreifung nicht oder praktisch nicht mehr auf. Hierin sind die wesentlichen Vorteile zu sehen.

## Patentansprüche

1. Kunststoff-Umreifungsband aus einer Matrix aus Kunststoff und darin eingelagerten Mikrokugeln zum Umschlingen von einem oder mehreren Gegenständen mit folgenden Bestandteilen:
a) 85 Gew.-% bis 90 Gew.-% Polyester und bis zu 5 Gew.-% Polyethylen, Polypropylen sowie Kombinationen;
b) bis zu 20 Gew.-% Mikrokugeln,
wobei die Mikrokugeln einen Durchmesser unterhalb von 0,5 mm aufweisen und aus einem Material mit einer oberhalb einer Verarbeitungstemperatur des Kunststoffes angesiedelten Schmelztemperatur bestehen, und
wobei die Mikrokugeln aus Bakelit, einem oder mehreren Mineralen, Steinwolle, Keramik, einem oder mehreren Metallen, einem Thermoplast oder Silikaten bestehen.

2. Umreifungsband nach Anspruch 1 , **dadurch gekennzeichnet, dass** die Mikrokugeln einen Durchmesser von weniger als 0,1 mm aufweisen.

3. Umreifungsband nach einem der Ansprüche 1 oder 2, **dadurch gekennzeichnet, dass** die Mikrokugeln eine Druckfestigkeit von mehr als 100 N/mm², insbesondere von mehr als 200 N/mm² aufweisen.

4. Umreifungsband nach einem der Ansprüche 1 bis 3, **dadurch gekennzeichnet, dass** die Mikrokugeln ein Elastizitätsmodul von mehr als 10 kN/mm², insbesondere mehr als 50 kN/mm² und bevorzugt von mehr als 100 kN/mm² aufweisen.

5. Umreifungsband nach einem der Ansprüche 1 bis 4, **dadurch gekennzeichnet, dass** es aus einem in Streifen geschnittenen Kunststoff-Umreifungsbandmaterial und/oder einem streifenförmig hergestellten Bandmaterial produziert ist.

6. Verfahren zur Herstellung eines Kunststoff-Umreifungsbandes, nach einem der Ansprüche 1 bis 5, wonach die Bestandteile a) und b) miteinander gemischt und gemeinsam extrudiert sowie anschließend das entstehende Kunststoff-Umreifungsband oder Kunststoff-Umreifungsbandmaterial gestreckt wird, und wonach zum Abschluss das Kunststoff-Umreifungsband oder das Kunststoff-Umreifungsbandmaterial unter Berücksichtigung eines Streckgrades von 1:2 bis 1:5 und insbesondere 1:4 gestreckt sowie anschließend gegebenenfalls an einer Bandoberfläche geprägt wird.

7. Verwendung eines Kunststoff-Umreifungsbandes nach einem der Ansprüche 1 bis 5 zur Umreifung eines oder mehrerer Gegenstände, wobei die Enden des Kunststoff-Umreifungsbandes thermisch miteinander sowie unter gleichzeitiger gegenseitiger Migration der eingelagerten Mikrokugeln miteinander verbunden werden.

## Claims

1. A plastic strap made of a plastic matrix with microbeads embedded in it for wrapping around one or more objects with the following ingredients:
a) 85% by weight to 90% by weight polyester and up to 5% by weight polyethylene, polypropylene and combinations thereof;
b) up to 20% by weight microbeads,
wherein the microbeads have a diameter of less than 0.5 mm and are made of a material with a melting point above the processing temperature of the plastic, and
wherein the microbeads are made of Bakelite, one or more minerals, rock wool, ceramic, one or more metals, a thermoplastic or silicates.

2. The strap according to claim 1, **characterized in that** the microbeads have a diameter of less than 0.1 mm.

3. The strap according to any one of claims 1 or 2, **characterized in that** the microbeads have a compressive strength of more than 100 N/mm², in particular more than 200 N/mm²,

4. The strap according to any one of claims 1 to 3, **characterized in that** the microbeads have an elastic modulus of more than 10 kN/mm², in particular more than 50 kN/mm², and preferably more than 100 kN/mm².

5. The strap according to any one of claims 1 to 4, **characterized in that** it is produced from a strip stock manufactured from plastic strap material cut in strips and/or a belt material manufactured in strips.

6. A method for manufacturing a plastic strap according to any one of claims 1 to 5, wherein ingredients a) and b) are mixed together and extruded jointly and the resulting plastic strap or plastic strap material is then stretched, after which, in conclusion, the plastic strap or plastic strap material is stretched, taking into account a degree of stretching of 1:2 to 1:5 and in particular 1:4, and then optionally is imprinted on a belt surface.

7. Use of a plastic strap according to any one of claims 1 to 5 for wrapping around one or more objects, wherein the ends of the plastic strap are thermally bonded to one another, with simultaneous mutual migration of the incorporated microbeads into one another.

## Revendications

1. Bande de cerclage en matière plastique, consistant dans une matrice en matière plastique et dans des microsphères incorporées dans cette dernière, destinée à être enroulée autour d'un ou de plusieurs objets, comportant les composants suivants :
a) de 85 % en poids à 90 % en poids de polyester et jusqu'à 5 % en poids de polyéthylène, de polypropylène ainsi que des associations ;
b) jusqu'à 20 % en poids de microsphères,
les microsphères ayant un diamètre inférieur à 0,5 mm et étant composées d'une matière faisant preuve d'une température de fusion établie au-delà d'une température de mise en oeuvre de la matière plastique et
les microsphères étant composées de bakélite, d'un ou de plusieurs minéraux, de laine minérale, de céramique, d'un ou de plusieurs métaux, d'une matière thermoplastique ou de silicates.

2. Bande de cerclage selon la revendication 1, **caractérisée en ce que** les microsphères présentent un diamètre inférieur à 0,1 mm.

3. Bande de cerclage selon l'une quelconque des revendications 1 ou 2, **caractérisée en ce que** les microsphères font preuve d'une résistance à la compression de plus de 100 N/mm², notamment de plus de 200 N/mm².

4. Bande de cerclage selon l'une quelconque des revendications 1 à 3, **caractérisée en ce que** les microsphères font preuve d'un module d'élasticité de plus de 10 kN/mm², notamment de plus de 50 kN/mm² et de préférence, de plus de 100 kN/mm².

5. Bande de cerclage selon l'une quelconque des revendications 1 à 4, **caractérisée en ce qu'**elle est produite à partir d'une matière de bande de cerclage en plastique coupée en rubans et/ou en une matière pour bande fabriquée en forme de rubans.

6. Procédé, destiné à fabriquer une bande de cerclage en matière plastique selon l'une quelconque des revendications 1 à 5, selon lequel on mélange ensemble les composants a) et b) et on les extrude en commun, ainsi que par la suite, on étire la bande de cerclage en matière plastique obtenue ou la matière pour bande de cerclage en matière plastique obtenue et selon lequel, pour terminer, on étire la bande de cerclage en matière plastique ou la matière pour bande de cerclage en matière plastique sous considération d'un degré d'étirement de 1:2 à 1:5 et notamment de 1:4 et par la suite, on la gaufre le cas échéant sur une surface de la bande.

7. Utilisation d'une bande de cerclage en matière plastique selon l'une quelconque des revendications 1 à 5 pour le cerclage d'un ou de plusieurs objets, les extrémités de la bande de cerclage en matière plastique étant assemblées l'une à l'autre par procédé thermique, ainsi que sous migration réciproque simultanée des microsphères incorporées.
